# EUROPÄISCHE PATENTSCHRIFT

(11) **EP 3 012 102 B1**
(45) Veröffentlichungstag und Bekanntmachung des Hinweises auf die Patenterteilung: **07.11.2018**
(21) Anmeldenummer: 15003132.6
(22) Anmeldetag: 12.07.2001
(51) Int. Cl.: B32B 27/32, C08J 5/18, C08K 3/00, A01G 13/02, C08K 5/00, C08K 3/04

(54) **SCHUTZFOLIE**
PROTECTIVE FILM
FILM DE PROTECTION

(43) Veröffentlichungstag der Anmeldung: 27.04.2016
(62) Teilanmeldung aus: 01116984.4
(73) Patentinhaber: Ewald Dörken AG, 58313 Herdecke (DE)
(72) Erfinder: Jablonka, Dieter, DE - 58313 Herdecke (DE); Schröer, Jörn, DE - 58313 Herdecke (DE); Klingelhage, Norbert, DE - 58300 Wetter (DE)
(74) Vertreter: Von Rohr Patentanwälte Partnerschaft mbB

(56) Entgegenhaltungen:
- EP-A- 0 155 595
- EP-A- 0 607 031
- EP-A- 0 668 321
- US-A- 3 896 585
- DATABASE WPI Section Ch, Week 199528 Thomson Scientific, London, GB; Class A97, AN 1995-211541 XP002180115, & JP 7 123875 A (SUMITOMO CHEM CO LTD) 16. Mai 1995 (1995-05-16)
- DATABASE WPI Section Ch, Week 198928 Thomson Scientific, London, GB; Class A18, AN 1989-201891 XP002180116, & JP 1 139257 A (SUMITOMO CHEM IND KK) 31. Mai 1989 (1989-05-31)
- DATABASE WPI Section Ch, Week 199420 Thomson Scientific, London, GB; Class A97, AN 1994-163818 XP002180117, & JP 6 107507 A (TAKIRON KK) 19. April 1994 (1994-04-19)

## Beschreibung

Die Erfindung betrifft die Verwendung einer Schutzfolie im Baubereich gegen Witterungseinflüsse nach dem Oberbegriff des Anspruchs 1.

Schutzfolien werden für längerfristige oder sogar dauerhafte Abdeckungen und Umhüllungen zum Beispiel in der Land-, Bau- und Forstwirtschaft benötigt. Der Einsatz von Schutzfolien dient dabei dem Werterhalt von Erntegütern, Baumaterialien, Maschinen und dergleichen, soweit diese im Freien den Wetterbedingungen ausgesetzt sind. Auch zur vorübergehenden oder permanenten Abdeckung von Gerüsten oder von Balkenkonstruktionen an und in Gebäuden erweisen sich Schutzfolien als sinnvoll.

Aus der JP 7123875 A ist eine verstreckte, wasserdichte und wasserdampfdurchlässige Landwirtschaftsfolie bekannt. Diese Landwirtschaftsfolie ist mehrschichtig aufgebaut, wobei eine Schicht mit Calciumcarbonat und eine andere Schicht mit Rußpigmenten versehen ist.

Aus der EP 0 155 595 A2 ist eine opake und siegelfähige Folie zur Herstellung von Verpackungen auf dem Lebensmittelgebiet, insbesondere zum Einhüllen von Süßigkeiten und Schokolade, bekannt. Die Folie umfasst eine Trägerschicht auf Basis von Polypropylen, feste Teilchen, eine siegelfähige äußere Oberflächenschicht und eine thermostabile Farbsubstanz, die in der Trägerschicht enthalten ist.

Die JP 1139257 A offenbart eine Mulchfolie bestehend aus drei Lagen. Die Lagen sind mittels Koextrusion hergestellt.

Die JP 6107507 A betrifft ein Band zum Schutz vor Nagetieren, wobei Stabilisatoren zu einem Polyethylen als Basismaterial zugemischt und anschließend zu einer Folie extrudiert werden.

Aus der EP 0 668 321 A geht eine UV-stabilisierte Polyoxymethylenformmasse hervor, die im Automobilbereich eingesetzt wird.

Die US 3,896,585 A betrifft eine Landwirtschaftsfolie auf Basis von Polypropylen und enthaltend Stabilisatoren und Rußpartikel.

Die EP 0 607 031 A betrifft ein Schutzmaterial gegen Wärmestrahlung. Das Schutzmaterial besteht aus einem Phthalocyanin.

Im optimalen Fall wird eine Schutzfolie für derartige Zweck einem breiten Spektrum von Anforderungen gerecht:
Die Schutzfolie muss
   - zuverlässig wasserdicht sein, und zwar nicht nur gegen Wasser in flüssiger Form als Tropfen (Regen, Tau, nässender Nebel), sondern ebenso gegen sich ansammelndes, stehendes, flüssiges Wasser dicht sein und auch gegen Wasser in fester Form als Eiskristallite, Schnee, Hagel und dergleichen Schutz bieten;
   - sie soll nur eine geringe Wasseraufnahmefähigkeit besitzen;
   - sie muss unabhängig von den Witterungsbedingungen und ungeachtet der Temperatur im Sommer wie im Winterhohe Flexibilität und mechanische Widerstandskraft gegen Stoß und Schlag aufweisen; für viele Anwendungsfälle sollte sie trittfest sein oder, etwa durch Laminierung, entsprechend ausgerüstet werden können;
   - sie muss starke Temperaturwechsel vertragen und darf bei Kälte nicht verspröden;
   - sie darf an Durchstoßungspunkten (wie sie zum Beispiel beim Antackern entstehen) auch unter gebrauchsüblicher Belastung nicht weiter reißen;
   - sie muss eine geeignete spezifische Dichte aufweisen; vor allem sollte sie hinreichend leicht für eine bequeme Handhabung sein;
   - sie muss sich problemlos schweißen und kleben lassen;
   - sie sollte gegen die Einwirkung von Lösemitteln und Umweltchemikalien weitgehend beständig sein;
   - sie sollte unter ökologischen Gesichtspunkten in Herstellung und Betrieb und Entsorgung möglichst keine Probleme aufwerfen;
vor allem aber muss
   - sie möglichst beständig gegen die Kombinationswirkung von UV-Strahlung, Abbau durch Reaktion mit Atmosphärenbestandteilen und Wärmeeinwirkung sein;
   - darüber hinaus muss sie parallel zu der vorgenannten, zuverlässigen Wasserdichtigkeit auch eine hohe Wasserdampfdurchlässigkeit aufweisen, damit die Bildung von schädlichem Schwitzwasser und schädlichen Feuchtigkeitsstaus unter der Schutzfolie weitgehend ausgeschlossen werden kann und
      bei alledem muss sie sich mit vertretbaren Kosten, also aus gut zugänglichen Rohstoffen und mit geringem Aufwand produzieren lassen.

Die letztgenannten Anforderungen sind für die Gebrauchstüchtigkeit und Wirtschaftlichkeit einer Schutzfolie von besonderer Bedeutung. Zum einen leiten Licht, Luft, Sauerstoff und Wärme in Kunststoffen Abbauvorgänge ein, als deren Folge sich nicht nur das visuelle Erscheinungsbild ändert, sondern auch zahlreiche mechanische und physikalische Eigenschaften negativ beeinflusst werden.

Zum anderen verderben mit der Zeit durch Feuchtigkeitsstaus und Schwitzwasser unter einer nicht diffusionsoffenen Schutzfolie in den meisten Anwendungsfällen die unter der Schutzfolie liegende Materialien, und zwar entweder durch direkte chemische Einwirkung von Wassermolekülen oder durch Begünstigung mikrobieller Wachstumsbedingungen und der durch den Mikrobenstoffwechsel eingeleiteten Prozesse.

Bislang steht für das große Anwendungsgebiet der Bau-, Forst- und Landwirtschaft im Stand der Technik noch keine Flächenmaterialien zur Verfügung, das bei vertretbaren Herstellungskosten ein weitgehend optimales Spektrum der Gebrauchseigenschaften bieten. Dies gilt insbesondere in Hinsicht auf die wesentliche Kombination von Wasserdichtigkeit, Wasserdampfdurchlässigkeit und Beständigkeit gegen Abbau unter den Licht- und Wärmeeinwirkungen.

Seit alters werden textile Materialien (Zeltplanen) für Abdeckzwecke eingesetzt. Diese sind zwar einigermaßen wasserdampfdurchlässig, aber auch bei Imprägnierung nicht zuverlässig wasserdicht, vor allem nicht gegen stehendes Wasser. Dazu können sie, insbesondere im nassen Zustand, kaum handhabungsfreundlich genannt werden.

Mit der Verfügbarkeit von polymeren Flächenmaterialien wurden dann Schutzfolien, insbesondere aus Polyethylen oder Polyvinylchlorid, zum Einsatz gebracht. Solche Polymerfolien sind kostengünstig herstellbar, mechanisch hinreichend stabil und zuverlässig wasserdicht. Gegenüber Zeltplanen stellen sie hinsichtlich der Handhabungsfreundlichkeit einen Fortschritt dar.

Es ist auch durchaus möglich, PE- oder PVC-Folien mit bekannten UV-Absorbentien und Antioxidantien für das eine oder andere Anwendungsgebiet hinreichend alterungsbeständig zu machen. Es liegt für die unterschiedlichsten Polymere ein umfangreiches Repertoire an Stabilisator-Rezepturen vor. Die Lebensdauer einer frei zu bewitternden Folie kann durch Zugabe entsprechender Stabilisatormengen in gewissen Grenzen bedarfsgerecht eingestellt werden. Derartige stabile Schutzfolien sind zwar billig und hervorragend wasserdicht, aber nicht diffusionsoffen gegenüber Wasserdampf.

Die in neuerer Zeit verfügbaren, wasserdichten und gut wasserdampfdurchlässigen polymeren Flächenmaterialien auf Polyester- oder Polyurethanbasis, die im Bekleidungsbereich als Klimamembranen mit Vorteil eingesetzt werden, scheiden als schützende Flächenmaterialien in Land-, Forst und Bauwirtschaft schon aus Kostengründen aus.

Feuchtigkeitshemmende und gleichzeitig wasserdampfdurchlässige, dünne Folien auf der Basis von verstreckten, mit anorganischen Füllstoffen versehenen, verschiedenen Thermoplasten sind bisher aus dem Sanitärbereich bekannt. Derartige Folien werden im Zusammenhang mit wasserabsorbierenden Schichten in sanitären Verbrauchsartikeln als zusätzlicher Nässeschutz verwendet. Vor allem ihre geringe Lebensdauer unter natürlichen Bedingungen macht diese Folien als großflächige Materialien für den bau-, land- und forstwirtschaftlichen Einsatz als Witterungsschutz im Freien ungeeignet.

Aufgabe der vorliegenden Erfindung ist es daher, eine Schutzfolie zur Verwendung im Baubereich zur Verfügung zu stellen, mit deren Hilfe die Nachteile des Standes der Technik überwunden werden, wobei die Schutzfolie insbesondere
- hohe und dauernde Thermo-, Chemo- und UV-Stabilität unter insbesondere erheblich verbesserter Erhaltung von Reißkraft und Reißdehnung
   und
- unter allen natürlichen Druck- und Temperaturbedingungen ausgezeichnete Wasserdampfdurchlässigkeit
   aufweist.

Diese Aufgabe wird durch die Verwendung einer Schutzfolie mit den Merkmalen des Anspruchs 1 gelöst. Die Unteransprüche betreffen vorteilhafte Ausführungsformen dieser Schutzfolie.

Die vorliegende, in Anspruch 1 charakterisierte Erfindung macht es auf vergleichsweise einfache Weise möglich, durch Einarbeitung dunkler Pigmente in verstreckte, harte Füllstoffe enthaltende polyolefinische Polymere verschiedener Art, die Wirtschafts- und Gebrauchsanforderungen, die an eine Schutzfolie für Bau-, Land- und Forstwirtschaft gestellt werden, weitgehend zu erfüllen. Es hat sich überraschend erwiesen, dass derartig mit dunklen Pigmenten ausgerüstete, polyolefinische, harte Füllstoffe enthaltende, durch Verstreckung diffusionsoffene Folien eine ausgezeichnete kombinierte Witterungsstabilität (vor allem gegen UV-Bestrahlung und thermische Belastung) bei erhöhter Wasserdampfdurchlässigkeit und auch in den übrigen genannten Gebrauchsaspekten positive Eigenschaften aufweisen.

Diese günstige Kombination von Eigenschaften gemäß der Lehre der Erfindung kann allgemein mit polyolefinischen Homopolymeren, Copolymeren, Blends und dergleichen erreicht werden. Die positiven Auswirkungen der dunklen Pigmentierung ist zudem unabhängig von vorhandenen Additiven, seien es Weichmacher, Weißpigmente, UV-Absorber, Antioxidantien, Antistatika oder ähnliche Substanzen, mit denen weitere Eigenschaften der Schutzfolie eingestellt werden können.

Nach den vorliegenden Erkenntnissen ist die positive technische Wirkung der erfindungsgemäßen Lehre weitgehend unabhängig von der chemischen Natur, der speziellen Farbe und den Kornabmessungen der verwendeten Pigmente, die auch in Mischung verwendet werden können. Es kommen für die Zwecke der Erfindung vor allem blaue, grüne, braune und - die Schutzfolie nach Verstreckung grau erscheinen lassende - schwarze Pigmentierungen in Frage. Der Fachmann kann die Wahl unter handelsüblichen Pigmentformulierungen nach Kostengesichtspunkten treffen und ist frei, gegebenenfalls erwünschte Zusatzeigenschaften technischer oder ästhetischer Art bei der Entscheidung für ein bestimmtes Pigment oder eine bestimmte Pigmentmischung mit zu berücksichtigen.

Kostengesichtspunkte können auch die als zweckmäßig erkannten Pigmentkonzentrationen in der erfindungsgemäßen Schutzfolie bestimmen.

Unterhalb einer Konzentration von 0,5 Gew.% des Pigments oder der Pigmente bezogen auf das Gesamtgewicht der Schutzfolie ist nicht mit zuverlässiger Wirkung im Sinne der Erfindung zu rechnen; oberhalb von 10 Gew.% werden auch die derzeit zur Verfügung stehenden 'billigen' dunklen Pigmenten eher unwirtschaftlich.

Als zweckmäßiger Kompromiss zwischen der positiven Wirkung auf insbesondere UV- und Thermostabilität sowie Wasserdampfdurchlässigkeit einerseits und Kostenaufwand andererseits haben sich Pigmentkonzentrationen von 0,5 Gew.% bis 3 Gew.% herausgestellt. Sichere und gute Ergebnisse erhält man generell mit Pigmentkonzentrationen von 1,5 Gew.% bis 2,5 Gew.% bezogen auf das Gesamtgewicht der Schutzfolie.

Wie erwähnt, sind die speziellen Abmessungen der verwendeten dunklen Pigmente ohne große Bedeutung für den erwünschten allgemeinen Stabilisierungseffekt. Der Einsatz von Partikeln im Durchmesserbereich von 5 nm bis 5000 nm ist im Sinne der erfindungsgemäßen Lehre erfolgversprechend. Unerwartet wurde gefunden, dass der beobachtete günstige Einfluss auf die Wasserdampfdurchlässigkeit sich mit abnehmendem mittleren Partikeldurchmesser des Pigments oder der Pigmente verstärkt, so dass neben der guten Witterungsstabilisierung eine Erhöhung der Wasserdampfdurchlässigkeit zu verzeichnen ist, die die Funktionalität der erfindungsgemäßen Schutzfolie noch weiter optimiert. Bei Partikeldurchmessern unter 500 nm tritt nach den bisherigen Erkenntnissen diese erwünschte Eigenschaft besonders deutlich zutage.

Während die chemische Natur der erfindungsgemäß geeigneten dunklen Pigmente keiner besonderen Beschränkung unterliegt, sprechen Verfügbarkeitsgründe für den Einsatz von Metalloxiden, zum Beispiel Eisenoxidschwarz, Graphiten und Rußen.

Vor allem unter dem Kostengesichtspunkt ist derzeit die Verwendung von Kohlenstoffpartikeln, also Ruß, vorgesehen. Ausgezeichnete Ergebnisse hinsichtlich der Witterungsstabilität und der Wasserdampfdurchlässigkeit bei hervorragender Wasserdichtigkeit ist erfindungsgemäß mit Ruß zu erreichen, dessen mittlerer Partikeldurchmesser im Bereich von 20 bis 100 nm liegt.

Die äußere Form der Partikel ist dabei nicht kritisch. Auch langgestreckte Kohlenstoffpartikel mit einem Durchmesser von wenigen nm, sogenannte 'nano - tubes', können mit Vorteil in füllstoffhaltigen, durch Verstreckung mit diffusionsoffenen Porenstrukturen versehenen Polyolefinen zur Witterungsstabilisierung und Erhöhung der Wasserdampfdurchlässigkeit eingesetzt werden. Derartige Schutzfolien gemäß der Erfindung zeichnen sich dann zusätzliche technische Eigenschaften, wie etwa elektrische Leitfähigkeit aus.

Ebenso wenig kritisch für den erfindungsgemäß erreichbaren technischen Kombinationseffekt ist die Art der Füllstoffe in dem verstreckten polyolefinischen Homopolymeren, Copolymeren oder Blend. Füllstoffe verschiedenster chemischer Struktur führen beim Verstrecken zu offenen Mikroporensystemen. Für die hier beschriebene Schutzfolie, bei der weder hygroskopische Eigenschaften noch biologische Abbaubarkeit erwünscht sind, erweist es sich als zweckmäßig als Füllstoffe synthetische oder natürliche anorganische Substanzen einzusetzen. Diese sind, insbesondere in Form von Calciumcarbonaten hinreichend inert, haben eine günstige Dichte und sind insbesondere in Form von natürlichen Calciummineralien, wie etwa Kreide, günstig zu beschaffen.

Sollen jedoch besondere Eigenschaften der Schutzfolie, wie zum Beispiel eine erheblich erhöhte Flammfestigkeit bewirkt werden, können als Füllstoffe ohne weiteres auch Hydroxide, wie Aluminiumhydroxid oder Dawsonit zum Einsatz kommen.

Ein besonderer Aspekt der vorliegenden Erfindung ist die Möglichkeit, durch Zusatz des dunklen Pigments oder der dunklen Pigmente - und durch die dadurch verbesserte Wasserdampfdurchlässigkeit - mit geringeren Füllstoffmengen zu arbeiten. Der dadurch verringerte Feststoffgehalt und die verringerte Porosität bei gleichwohl guter Wasserdampfdurchlässigkeit haben zusätzliche positive Auswirkungen auf die mechanischen Eigenschaften und die Witterungsstabilität der Schutzfolie.

Wie bereits erwähnt, ist die chemische Spezifikation des eingesetzten Polyolefins nicht wesentlich für den erfindungsgemäßen technischen Effekt.

Günstige Ergebnisse werden bereits erzielt, wenn die Schutzfolien gemäß der Erfindung auf kostengünstige Weise nur monoaxial verstreckt sind. Unregelmäßige monoaxiale Verstreckung mit nebeneinander vorliegenden un-, teil- und vollverstreckten Bereichen im Flächenverlauf der Schutzfolie stellt dabei die Funktionalität der erfindungsgemäßen dunkel pigmentierten Schutzfolie nicht in Frage.

Nach der Lehre der Erfindung ist es jedoch auch möglich, von biaxial verstreckten Folien Gebrauch zu machen. Auch derartige Folien können unregelmäßige Verstreckungsverhältnisse und sogar verstreckte und unverstreckte Bereiche nebeneinander aufweisen, ohne dass der erfindungsgemäße technische Erfolg in Frage gestellt wird.

Die erfindungsgemäßen Schutzfolien können als solche direkt zum Einsatz kommen. Es ist jedoch vorteilhaft, sie insbesondere zur Erhöhung der mechanischen Stabilität in an sich bekannter Weise als Funktionsschicht in flächigen Verbundwerkstoffen zu verwenden.

Die hier beschriebene und in den Ansprüchen unter Schutz gestellte Erfindung stellt somit vor allem hinsichtlich der Witterungsstabilität und Wasserdampfdurchlässigkeit bislang unzugängliche, gebrauchstüchtige Schutzfolien in einer Vielzahl von möglichen Varianten zur Verfügung. Die Möglichkeit, mit kostengünstigen Ausgangsmaterialien gute Ergebnisse zu erzielen, macht die Erfindung wirtschaftlich besonders interessant.

Die Wirkungsweise der Erfindung wird anhand der folgenden Ausführungsbeispiele erläutert:
Es wurde jeweils eine Polymerbasis mit Pigmentkonzentrat und an sich bekannten Additiven unter weitgehend gleichen Verfahrensbedingungen zu einer Primärfolie von ca. 135 g/m² extrudiert und in zwei Verstreckschritten monoaxial um den Gesamtfaktor 4,5 auf ein Flächengewicht von ca. 30 g/m² verstreckt.

| Basisrezepturen: | | |
|---|---|---|
| Beispielrezeptur | Polymerbasis | Füllstoff |
| 1 | Blend eines Polypropylen-Homopolymer (PP-H) mit einem Polypropylen-Random-Copolymer (PP-R) und einem linearen Polyethylen niedriger Dichte (PE-LLD) | Calciumcarbonat CaCO₃ Typ 3 mit einer mittleren Korngrösse von ca. 2 µm |
| 2 | Blend eines Polypropylen-Homopolymer (PP-H) mit einem Polypropylen-Random-Copolymer (PP-R) und einem linearen Polyethylen niedriger Dichte (PE-LLD) | Calciumcarbonat CaCO₃ Typ 2 mit einer mittleren Korngrösse von ca. 1,8 µm |
| 3 | Polypropylen (PP) | Calciumcarbonat CaCO₃ Typ 3 mit einer mittleren Korngrösse von ca. 2 µm |
| 4 | Blend eines Polypropylen-Homopolymer (PP-H) mit einem Polypropylen-Random-Copolymer (PP-R) und einem linearen Polyethylen niedriger Dichte (PE-LLD) | Calciumcarbonat CaCO₃ Typ 4 mit einer mittleren Korngrösse von ca. 1,8 µm |

| Pigmentkonzentrate: | | |
|---|---|---|
| Konzentrat | Trägermaterial | Pigment/Anteil ca. 40% |
| 1 | Polyethylen niedriger Dichte (PE-LD | Russ Typ1, Partikeldurchmesser 60-70 nm |
| 2 | Polyethylen niedriger Dichte (PE-LD) | Russ Typ2, Partikeldurchmesser 20 nm |
| 3 | Polyethylen niedriger Dichte (PE-LD) | Russ Typ 3, Partikeldurchmesser 20 -23 nm |

| Additive: | |
|---|---|
| Paket | Beschreibung |
| 1 | 1,05 % Anteil einer Mischung aus einem gehinderten amidischen Lichtschutzmittel (HALS), primären Antioxidantien (prim. AO) und sekundären Antioxidantien (sek. AO) |
| 2 | primäre Antioxidantien |
| 3 | 1,05 % Anteil einer Mischung aus einem gehinderten amidischen Lichtschutzmittel (HALS), primären Antioxidantien (prim. AO) und sekundären Antioxidantien (sek. AO) |

Die folgenden Tabellen zeigen Beispielergebnisse mit den angegebenen Rezepturen. Aufgeführt sind die Gehalte in Gewichtsprozent; die Wasserdampfdurchlässigkeit wurde nach DIN 52615 (23 °C/o-80) gemessen und die relative Reißdehnung (RD), bezogen auf die als 100 % gesetzte Reißdehnung vor der Bewitterung nach 336 h beziehungsweise 672 h künstlicher Bewitterung in einem QUV-Gerät gemäß DIN 53384, Lampen UVA 340 (Typ 1) [0,77 W/(m² x nm)] gemessen.

### Bewitterungsergebnisse

**Tabelle 1:**

| Basisrezeptur 1 + Additivpaket 1 | | | | | | |
|---|---|---|---|---|---|---|
| Pigment Konzentrat | Partikelgehalt Gew.% | Gehalt CaCO₃ Gew.% | Gehalt Pigment Gew. % | WDD [g/(m² x 24 h)] | RD 336 h | RD 672 h |
| kein | 60 | 60 | 0 | 1557 | 8,7 | 3,2 |
| 1 | 59 | 57,1 | 1,9 | 1542 | 67,3 | 46,6 |
| 2 | 59 | 57,1 | 1,9 | 1600 | | |
| kein | 58 | 58 | 0 | 1310 | | |
| kein | 56 | 56 | 0 | 1180 | | |
| kein | 54 | 54 | 0 | 825 | | |
| kein | 52 | 52 | 0 | 750 | | |
| kein | 50 | 50 | 0 | 527 | 13,1 | 6,1 |

**Tabelle 2:**

| Basisrezeptur 2 + Additivpaket 1 | | | | | | |
|---|---|---|---|---|---|---|
| Pigment Konzentrat | Partikelgehalt Gew.% | Gehalt CaCO₃ Gew.% | Gehalt Pigment Gew. % | WDD [g/(m² x 24 h)] | RD 336 h | RD 672 h |
| kein | 60 | 60 | 0 | 1375 | 18,3 | 6,3 |
| 2 | 59 | 57,1 | 1,9 | 1328 | 81,4 | 68,1 |
| kein | 50 | 50 | 0 | 427 | 24,6 | 15,4 |

**Tabelle 3:**

| Basisrezeptur 3 + Additivpaket 2 | | | | | | |
|---|---|---|---|---|---|---|
| Pigment Konzentrat | Partikelgehalt Gew.% | Gehalt CaCO₃ Gew.% | Gehalt Pigment Gew. % | WDD [g/(m² x 24 h)] | RD 336 h | RD 672 h |
| kein | 60 | 60 | 0 | 1513 | | |
| 2 | 59 | 57,1 | 1,9 | 1690 | 84,7 | |
| 3 | 59 | 56,9 | 2,1 | 1558 | | |
| 3 | 58,1 | 56 | 2,1 | 1537 | | |

**Tabelle 4:**

| Basisrezeptur 3 + Additivpaket 3 | | | | | | |
|---|---|---|---|---|---|---|
| Pigment Konzentrat | Partikelgehalt Gew.% | Gehalt CaCO₃ Gew.% | Gehalt Pigment Gew. % | WDD [g/(m² x 24 h)] | RD 336 h | RD 672 h |
| kein | 57,1 | 57,1 | 0 | 1380 | 37,7 | 9,2 |
| 3 | 56,3 | 54,3 | 2 | 1513 | | |

**Tabelle 5:**

| Basisrezeptur 4 + Additivpaket 1 | | | | |
|---|---|---|---|---|
| Pigment Konzentrat | Partikelgehalt Gew. % | Gehalt CaCO₃ Gew. % | Gehalt Pigment Gew. % | WDD [g/(m² x 24 h)] |
| kein | 60 | 60 | 0 | 1403 |
| kein | 59 | 59 | 0 | 1304 |
| 1 | 59 | 56,9 | 2,1 | 1325 |
| kein | 58 | 58 | 0 | 1173 |
| 1 | 58 | 57,2 | 0,8 | 1112 |
| 1 | 58 | 54,4 | 3,6 | 1299 |

## Patentansprüche

1. Verwendung einer Schutzfolie im Baubereich gegen Witterungseinflüsse als längerfristige oder dauerhafte Abdeckung und Umhüllung in der Bauwirtschaft zum Werterhalt von Baumaterialien, die im Freien den Witterungsbedingungen ausgesetzt sind, wobei die Schutzfolie gegen Wasser in flüssiger und fester Form dicht ist und im Wesentlichen aus harte Füllstoffe enthaltenden, verstreckten, eine für gasförmiges Wasser durchlässige Mikroporenstruktur aufweisenden, polyolefinischen Homopolymeren, Copolymeren oder einem Polymerblend, besteht, wobei die harten Füllstoffe beim Verstrecken der Schutzfolie zu der Mikroporenstruktur führen, wobei die Schutzfolie wasserdampfdurchlässig ist und wobei in der Schutzfolie dunkle Pigmente ausgewählt aus der Gruppe der Ruße vorhanden sind, die an der Schutzfolie einen Anteil von wenigstens 0,5 Gew.% und höchstens 10 Gew.% bezogen auf das Gesamtgewicht der Schutzfolie haben,
**dadurch gekennzeichnet,**
**dass** die Ruße einen mittleren Partikeldurchmesser im Bereich von 20 bis 100 nm aufweisen und
**dass** Additive vorhanden sind, die als primäre Antioxidantien in die Schutzfolie eingebracht sind.

2. Verwendung nach Anspruch 1, **dadurch gekennzeichnet, dass** die dunklen Pigmente an der Schutzfolie einen Anteil von wenigstens 0,5 Gew.% und höchstens 3 Gew.%, bevorzugt 1,5 Gew.% bis 2,5 Gew.%, bezogen auf das Gesamtgewicht der Schutzfolie, ausmachen.

3. Verwendung nach Anspruch 1 oder 2, **dadurch gekennzeichnet, dass** der (die) Füllstoff(e) ausgewählt sind aus der Gruppe der natürlichen oder synthetischen anorganischen Substanzen, bevorzugt ausgewählt aus der Gruppe der Carbonate, Sulfate, Oxide, Hydroxide und/oder Silikate ist (sind), wobei Calciumcarbonat besonders bevorzugt ist.

4. Verwendung nach einem der Ansprüche 1 bis 3, **dadurch gekennzeichnet, dass** die Schutzfolie biaxial verstreckt ist, wobei die Schutzfolie bevorzugt in Längs- und Querrichtung ungleiche Verstreckungsgrade aufweist, und besonders bevorzugt im Flächenverlauf der Schutzfolie un-, teil- und vollständig verstreckte Bereiche nebeneinander vorliegen.

5. Verwendung nach einem der Ansprüche 1 bis 4, **dadurch gekennzeichnet, dass** die Schutzfolie monoaxial verstreckt ist, wobei bevorzugt im Flächenverlauf der Schutzfolie un-, teil- und vollständig verstreckte Bereiche nebeneinander vorliegen.

6. Verwendung nach einem der Ansprüche 1 bis 5, **dadurch gekennzeichnet, dass** die Schutzfolie aus polyolefinischen Homopolymeren, Copolymeren, Blend und dergleichen hergestellt ist.

7. Verwendung eines flächigen Verbundmaterials mit einer Schutzfolie nach einem der Ansprüche 1 bis 6 gegen Witterungseinflüsse in Form von UV-Bestrahlung, wobei die Schutzfolie als Funktionsschicht vorgesehen ist.

## Claims

1. Use of a protective film in the construction sector to protect against the weather as a more long-term or permanent cover or coating in the construction industry to retain the value of construction materials that are exposed to outdoor weather conditions, wherein the protective film is impermeable to water in its liquid and solid form and consists substantially of stretched polyolefin homopolymers, copolymers or a polymer blend containing solid fillers and comprising a micropore structure that is permeable to gaseous water, wherein the solid fillers result in the micropore structure when the protective film is being stretched, wherein the protective film is permeable to water vapour and wherein the protective film contains dark pigments, selected from the group of carbon black, having a proportion of the protective film of at least 0.5 wt.% and at most 10 wt.% based on the total weight of the protective film,
**characterised in that**
the carbon blacks have an average particle diameter in the range of 20 to 100 nm and
that additives are provided that are introduced into the protective film as primary antioxidants.

2. Use according to claim 1, **characterised in that** the dark pigments form a proportion of the protective film that is at least 0.5 wt.% and at most 3 wt.%, preferably 1.5 wt.% to 2.5 wt.%, based on the total weight of the protective film.

3. Use according to claim 1 or claim 2, **characterised in that** the filler(s) is/are selected from the group of natural or synthetic inorganic substances, preferably selected from the group of carbonates, sulphates, oxides, hydroxides and/or silicates, wherein calcium carbonate is particularly preferred.

4. Use according to any one of the claims 1 to 3, **characterised in that** the protective film is biaxially stretched, wherein the protective film preferably has unequal degrees of stretching in the longitudinal and transverse direction, and havingparticularly preferably non-stretched, partially stretched and completely stretched regions being next to one another in the planar extension of the protective film.

5. Use according to any one of the claims 1 to 4, **characterised in that** the protective film is monoaxially stretched, wherein preferably non-stretched, partially stretched and completely stretched regions are next to one another in the planar extension of the protective film.

6. Use according to any one of the claims 1 to 5, **characterised in that** the protective film is made of polyolefin homopolymers, copolymers, a blend and the like.

7. Use of a planar composite material having a protective film according to any one of the claims 1 to 6 for protecting against the weather in form of UV radiation, wherein the protective film is provided as a functional layer.

## Revendications

1. Utilisation d'un film de protection dans le secteur de la construction contre les conditions météorologique en tant que revêtement durable ou à long terme et en tant qu'enveloppe dans l'industrie de la construction pour la conservation de la valeur des matériaux de construction, qui sont exposés en extérieur aux conditions météorologiques, selon laquelle le film de protection est imperméable à l'eau sous sa forme liquide et solide et est essentiellement composé d'homopolymères polyoléfiniques, d'un mélange de polymère ou de copolymères étirés contenant des matières de charge dures et présentant une structure microporeuse perméable à l'eau à l'état gazeux, selon laquelle les matières de charge dures entraînent la structure microporeuse lorsque le film de protection est étiré, selon laquelle le film de protection est perméable à la vapeur d'eau et le film de protection comporte des pigments foncés sélectionnés dans le groupe des suies, qui ayant dans le film de protection une proportion d'au moins 0,5 % en poids et d'au plus 10 % en poids par rapport au poids total du film de protection,
**caractérisée en ce que**
les suies présentent un diamètre particulaire moyen dans la gamme de 20 et 100 nm et
**en ce que** des additifs sont présents, introduits en tant qu'antioxydants dans le film de protection.

2. Utilisation selon la revendication 1, **caractérisée en ce que** les pigments foncés dans le film de protection constituent une proportion d'au moins 0,5 % en poids et d'au plus 3 % en poids, de préférence entre 1,5 % en poids et 2,5 % en poids, par rapport au poids total du film de protection.

3. Utilisation selon la revendication 1 ou 2, **caractérisée en ce que** la/les matière(s) de charge est/sont sélectionnée(s) dans le groupe des substances inorganiques synthétiques ou naturelles, de préférence est/sont sélectionnée(s) dans le groupe des carbonates, des sulfates, des oxydes, des hydroxydes et/ou des silicates, selon laquelle/lesquelles le carbonate de calcium est préféré.

4. Utilisation selon l'une quelconque des revendications 1 à 3, **caractérisée en ce que** le film de protection est étiré biaxialement, selon lequel le film de protection présente de préférence dans la direction longitudinale et transversale des degrés d'étirement différents, et en particulier de préférence dans le tracé plan du film de protection se présentent des zones côté à côté entièrement, en partie ou pas complètement étirées.

5. Utilisation selon l'une quelconque des revendications 1 à 4, **caractérisée en ce que** le film de protection est étiré monoaxialement, selon lequel de préférence dans le tracé plan du film de protection se présentent des zones côté à côté entièrement, en partie ou pas complètement étirées.

6. Utilisation selon l'une quelconque des revendications 1 à 5, **caractérisée en ce que** le film de protection est fabriqué à partir d'homopolymères polyoléfiniques, de copolymères, de mélange et similaires.

7. Utilisation d'un matériau composite plat comprenant un film de protection selon l'une quelconque des revendications 1 à 6 contre les conditions météorologique sous la forme de rayonnement UV, selon laquelle le film de protection sert de couche fonctionnelle.
